# EUROPEAN PATENT SPECIFICATION

(11) **EP 4 606 516 B1**
(45) Date of publication and mention of the grant of the patent: **21.10.2026**
(21) Application number: 25159135.0
(22) Date of filing: 20.02.2025
(51) Int. Cl.: B23Q 1/74, B23Q 11/08, B27G 21/00, B27M 1/08

(54) **MACHINE FOR MACHINING WOOD**
MASCHINE ZUR BEARBEITUNG VOM HOLZ
MACHINE POUR USINER DU BOIS

(30) Priority: 23.02.2024 IT 202400003841
(43) Date of publication of application: 27.08.2025
(73) Proprietor: SCM Group S.p.A., 47921 Rimini (RN) (IT)
(72) Inventor: MACARI, Alan, 47921 Rimini (RN) (IT); ROSSI, Simone, 47921 Rimini (RN) (IT); GABRIELLI, Valter, 47921 Rimini (RN) (IT); PUCCI, Aureliano, 47921 Rimini (RN) (IT)
(74) Representative: Gallo, Gianluca

(56) References cited:
- EP-A1- 1 840 448
- IT-A1- BO20 030 137

## Description

This invention relates to a machine for machining wood or comparable materials, such as, for example, wood by-products, metal, plastic, stone, glass and composites.

More specifically, this invention relates to a Computer Numerical Control (CNC) machining centre, hereinafter abbreviated MC.

Known in the prior art are MCs having a bed to which a work table is coupled, so as to support and hold down a part to be machined. The work table defines a working plane.

The part to be machined may be, for example, a panel made of wood or comparable material, a solid wood square block or a part of any desired shape. The work table may be made in a number of different ways, depending on the shape of the part to be machined it has to support and hold down for machining.

For example, one type of work table known in the prior art is known as "multifunction table", i.e. an uninterrupted supporting table, typically made of aluminium, designed to support the panel to be machined. Placed between the panel to be machined and the multifunction table there is a panel, known as "sacrificial" panel, typically made of medium density fibreboard (MDF), whose purpose is to protect the multifunction table during machining which involves cutting through the panel to be machined. The multifunction table has a series of openings or holes which allow the top surface of the multifunction table to be placed in fluid-dynamic communication with one or more vacuum pumps, or volumetric pumps. The sacrificial panel is permeable to air, so the negative pressure generated by the volumetric pump acts on the panel to be machined to hold it firmly on the multifunction table.

Also known in the prior art are work tables known as "barred tables" comprising a system of movable bars which are provided, for example, with grippers and/or suction cups for supporting and holding down the part to be machined.

MCs of the prior art also have a crossbeam positioned on the work table. The crossbeam extends along a transverse direction, parallel to the working plane. Furthermore, the crossbeam is movable on the work table along a longitudinal direction, parallel to the working plane and perpendicular to the transverse direction.

Moreover, prior art MCs comprise what is known as a "machining head" which is coupled movably to the crossbeam. In particular, the machining head is coupled to the crossbeam so as to be movable along the transverse direction and along a vertical direction, perpendicular to the working plane, towards and away from the work table.

That way, the machining head is movable along three Cartesian axes which define the axes X (longitudinal), Y (transverse) and Z (vertical) of the MC.

The machining head may comprise one or more machining units such as, for example, electrospindles, motor spindles, drilling units and edge banding units. Generally speaking, the machining units typically comprise a spindle to which a machining tool is fixedly or removably coupled. The machining tool, rotating on the spindle can perform stock removal machining processes on the part to be machined.

Besides the tools, the spindle can also support tool units (also called *aggregates* or *heads*) such as, for example, right-angle tools, sawing units or other, more complex machining means.

Hereinafter in this disclosure, reference is made mainly to a tool coupled to the spindle. However, it should be borne in mind that, as stated, the spindle may support a tool or a tool unit in a perfectly interchangeable manner. The machining head may also have two rotary axes. In this particular case, the tool may have five degrees of freedom, being movable relative to the work table, along three Cartesian axes and about two rotary axes. Kinematic chains which are more complex and can provide the tool with more than five degree of freedom are known.

The machining head, with its machining units, is particularly dangerous for an operator working in the vicinity of it. In effect, as described above, the machining units have tools which can turn at high speed. As the tool rotates at high speed, a part of it - a plate for example - might accidentally come detached. The part that has accidentally come detached would then be propelled out of the machine at high speed, with the risk of injuring the operator.

It is therefore important to intercept any part that might be propelled out of the machine at high speed so as to prevent it from striking an operator.

Known in the prior art are safety systems comprising barriers, also known as enclosures or guards, designed to block any part that might accidentally come loose from the tool. An example of this is provided by patent application EP 1985412 A1, which describes an enclosure which completely surrounds the MC.

Such systems, however, are particularly cumbersome, need to be provided with doors to give access to the machine, and are not flexible. In effect, they prevent the operator from approaching the MC from all directions.

Also known are safety systems which comprise enclosures that completely surround the crossbeam, hence the machining head. Examples of this are patent applications EP 4286121 A1 and EP 4272893 A1. The enclosures described in those two patent applications are moved by the machine along the longitudinal direction together with the crossbeam, so as to block any part that may come detached from the tool, whatever the position of the machining head.

Precisely because of their size, the enclosures described in those two patent applications are heavy, and this in turn results in a considerable loss of machine performance, in terms of dynamics and vibrations.

Known in the prior art are still other safety systems comprising enclosures which laterally surround the machining head, as shown, for example, in Italian patent document IT BO20 030 137 A1, which forms the basis for the preamble of appended claim 1. The enclosure shown in that patent application is moved by the machine along the longitudinal direction and the transverse direction together with the machining head. Thanks to its extremely reduced size, the enclosure is particularly light in weight and does not reduce the dynamic performance of the MC. In that example, the machining head is enclosed at the sides by the enclosure and at the bottom by the work table. Thus, a part propelled out of the MC at high speed by the machining head would be intercepted by the enclosure or by the work table. It should be noted that any parts propelled upwards are not dangerous for the operator, so there are no enclosures in that direction.

However, in a case where a machining unit machines a part in a zone near the edge of the work table (for example, a side drilling operation on a panel, where the side to be drilled is located at the work table) the edge of the enclosure might not be aligned with the work table, thus creating a gap facing downwards. An accidentally detached part could be propelled through the opening by the machining head, thus injuring the operator.

This invention has for an aim to provide a machine for machining wood to overcome the above mentioned disadvantages of the prior art.

In particular, the aim of this invention is to provide a machine for machining wood that is simple and economical and offers good dynamic performance. This aim is fully achieved by the machine for machining wood as characterized in the appended claims.

This disclosure provides a machine for machining wood.

Advantageously, the machine may comprise a work table for supporting and holding down a part to be machined. The work table defines a working plane. The work table may, for example, be a multifunction table or a barred table. The machine may also comprise a machining head. The machining head may comprise one or more machining units. The machining head, hence the machining units may be movable on the work table along a longitudinal direction and a transverse direction. The longitudinal direction and the transverse direction are parallel to the working plane and perpendicular to each other. In addition, the machining head or each individual machining unit may be movable along a vertical direction, perpendicular to the work table. In particular, the machine may comprise a safety enclosure. The safety enclosure may be solidly coupled to the machining head, hence to the machining units. By "solidly" is meant that the safety enclosure is movable as one with the machining head at least along the longitudinal direction and the transverse direction. Furthermore, the safety enclosure may be configured to laterally surround at least part of the machining unit, in a view perpendicular to the working plane (i.e., in a plan view). By "laterally surround" is meant that the safety enclosure is positioned around the machining head, hence around the machining units, so as to laterally contain it in a closed space so that any parts that might come detached from the tool are blocked. The safety enclosure may, for example, have a rectangular, square, circular, C-shaped or semicircular cross section. The safety enclosure may laterally surround the whole machining head or it may surround at least part of it. As described in more detail hereinafter, if the safety enclosure does not completely surround the machining head, a part of the machine may act in conjunction with the safety enclosure so as to surround the whole of the machining head. In such a case, the part of the machine acts like a part of the safety enclosure (although it is not, for example, movable like the safety enclosure), at least in its function of laterally surrounding the machining head so as to block any parts that may be propelled by the tool. The safety enclosure may extend along the vertical direction substantially from the working plane to the top of the machining unit. However, the safety enclosure might not extend as far as the top of the machining head. It would be sufficient for it to extend as far as necessary to ensure the safety of the operator. That way, the machining head, hence the machining unit or units are contained within a space delimited at the sides by the safety enclosure and at the bottom by the work table. In the view perpendicular to the working plane, the machining unit is movable between a first working position, where the safety enclosure is contained completely within the work table, and a second working position, where a portion of the safety enclosure juts out from the work table. Advantageously, the machine may comprise a ledge adjacent to the work table. In particular, the ledge may be coplanar with the work table, i.e. the plane defined by the ledge coincides with the working plane defined by the work table. Thus, for example, there may be an uninterrupted surface between the ledge and the work table. In the view perpendicular to the working plane, the ledge may be configured to completely contain the portion of the safety enclosure which juts out from the work table at the second working position. Thanks to the ledge, which is adjacent to the work table, working positions close to the edge of the work table, where the safety enclosure would jut out from the work table, can be defined, while still ensuring that the machining unit is contained within a work space which is closed, at the sides, by the safety enclosure and, at the bottom, by the work table and the ledge.

Advantageously, the machine may comprise one or more ledges. For example, the machine may comprise a ledge which is adjacent to a longitudinal side of the work table, i.e. one of the two sides of the work table parallel to the longitudinal direction, or it may comprise a ledge which is adjacent to a transverse side of the work table, i.e. one of the two sides of the work table parallel to the transverse direction. In particular, the machine may comprise two, three, or four ledges, each ledge being disposed at a longitudinal or transverse side of the work table. That way, second working positions where the safety enclosure would jut out from the work table can be defined in proximity to one or more sides of the work table.

Additionally, in the view perpendicular to the working plane, the ledge may be greater than or equal in size to the maximum size of the portion of the safety enclosure which can jut out from the work table. In particular, the ledge may be greater than or equal in size to the whole of the portion of the safety enclosure so that all of it can jut out from the work table.

More specifically, the ledge may extend for the full length of one side of the work table. That way, it is possible to define second working positions all along the side of the work table.

Advantageously, the ledge may be adjacent to a longitudinal or transverse side of the work table, and movable respectively along the longitudinal direction or the transverse direction. That way, it is possible to define second working positions all along the longitudinal or transverse side of the work table without the ledge extending for the full length of one side of the work table. In effect, the ledge may be positioned, for example, automatically, at the different second working positions distributed along the side of the work table, as a function of the position of the safety enclosure.

Furthermore, the machine according to the invention may comprise a crossbeam. The crossbeam may extend along the transverse direction. In particular, the crossbeam may be movable on the work table along the longitudinal direction. The machining unit may be coupled to the crossbeam movably along the transverse direction. That way, the machining unit is movable above the working plane along the transverse and longitudinal directions. Advantageously, the ledge may be adjacent to a longitudinal side of the work table, and be coupled to the crossbeam so as to be movable along the longitudinal direction. More advantageously, the ledge may be of a size such that, and be positioned in such a way that, when the machining unit is at the end of the crossbeam, making the safety enclosure jut out from the work table, the safety enclosure, in the view perpendicular to the working plane, is automatically positioned on the ledge so that the machining unit is contained within a space which is closed, at the sides, by the safety enclosure and, at the bottom, by the work table and the ledge, or by the ledge only, depending on how far the safety enclosure juts out from the work table.

In particular, the machine may comprise a first ledge, adjacent to a first longitudinal side of the work table and coupled to the crossbeam, and a second ledge, adjacent to a second longitudinal side of the work table, opposite the first longitudinal side, and coupled to the crossbeam. That way, second working positions can be defined along both longitudinal sides of the machine, and the safety enclosure can jut out from the work table at both ends of the crossbeam.

Furthermore, the crossbeam may comprise a main beam which, in the view perpendicular to the working plane, is superposed on the work table. The crossbeam may also comprise a first set of brushes. The brushes may extend between the main beam and the work table. Furthermore, the crossbeam may comprise a first secondary beam positioned at the first longitudinal side and, in the view perpendicular to the working plane, jutting out from the work table. The crossbeam may also comprise a first protective guard extending between the first secondary beam and the first ledge. The crossbeam may further comprise a second secondary beam positioned at the second longitudinal side and, in the view perpendicular to the working plane, jutting out from the work table. The crossbeam may, in particular, comprise a second protective guard extending between the second secondary beam and the second ledge. The first and/or the second protective guard may be made of metal or may consist of a set of brushes. Advantageously, the crossbeam may have a first face, parallel to the transverse direction, and a second face, parallel and opposite to the first face. The machining unit may be coupled to the first face of the crossbeam. The machine may comprise a tool magazine located at one side of the machine, parallel and opposite to the second face of the crossbeam. In particular, the main beam may be configured to be able to be positioned over the tool magazine, in the view perpendicular to the working plane.

More advantageously, the safety enclosure may comprise a rigid portion and a second set of brushes extending between the rigid portion and the working plane.

Additionally, the ledge may comprise a flat portion. Furthermore, the ledge may comprise a protective wall. The protective wall extends substantially along the direction perpendicular to the work table, between the flat portion and, for example, the rigid portion of the safety enclosure (when the safety enclosure is positioned over the ledge) or as far as considered necessary for safety purposes. The protective wall may obviously also be inclined or have a segmented profile. The second set of brushes, like the safety enclosure, might not completely surround the machining head. The protective wall is designed to cooperate with the second set of brushes to laterally surround the machining head when the machining head is at the second working position and the safety enclosure juts out from the work table.

As mentioned above, in the view perpendicular to the working plane, the safety enclosure and the crossbeam cooperate to surround the machining unit laterally and completely. In this case, the portion of the crossbeam acts as a portion of the safety enclosure, as a function of the position of the machining unit on the crossbeam.

In addition, the machine comprises a safety system for detecting the ingress of an operator inside a safety area adjacent to the machine. In particular, the safety system may be embodied by photocells or safety mats. These sensors may be disposed in such a way as to detect ingress into the safety area adjacent to the machine. More than one safety area may be defined: for example, there may be a safety area for each side of the work table. That way, there is no need for safety barriers around the machine.

This and other features are more apparent in the following description of a preferred embodiment, illustrated purely by way of non-limiting example in the accompanying drawings, in which:
- Figure 1 shows a perspective view of a machine for machining wood according to the invention, in a first configuration;
- Figure 2 shows a perspective view of the detail of the machine for machining wood in a second configuration;
- Figure 3 shows a plan view of the machine for machining wood according to the invention, in the first configuration; and
- Figure 4 shows a plan view of the machine for machining wood according to the invention, in the second configuration.

Hereinafter in this disclosure, directional terms such as "right", "left", "front", "rear", "top", "bottom", "upper", "lower", "lateral" etc. are used with reference to the accompanying drawings. Since components and/or elements and/or embodiments of this invention may be positioned and/or operated in several different orientations, the directional terms are used solely by way of non-limiting example.

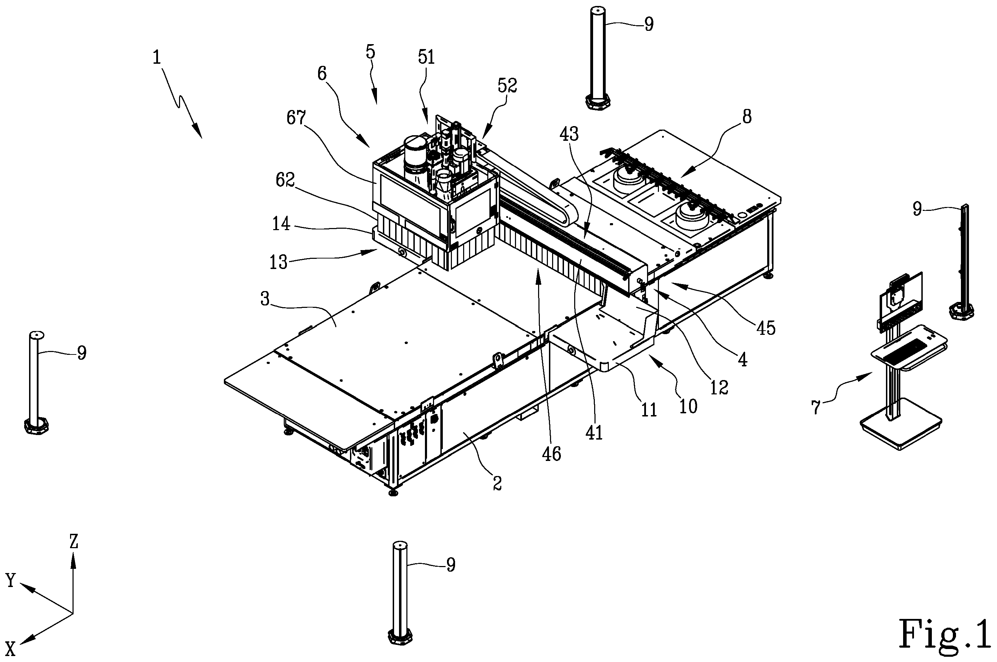

Figure 1 shows a machine 1 for machining wood.

The machine 1 comprises a bed 2.

The machine 1 also comprises a work table 3, coupled to the bed 2, to support and hold down the parts to be machined. In particular, the work table 3 is what is known as a "multifunction" table. The work table 3 extends along a longitudinal direction X and a transverse direction Y, perpendicular to the longitudinal direction. The work table 3 has a first and a second longitudinal side. The first and second longitudinal sides are parallel to the longitudinal direction X. The work table 3 also has a first and a second transverse side. The first and second transverse sides are parallel to the transverse direction Y. Typically, the longitudinal sides are longer than the transverse sides. The work table 3 defines a working plane XY. In particular, the working plane is substantially parallel to the surface, such as a floor, for example, which supports the machine 1.

Furthermore, the machine 1 comprises a crossbeam 4. The crossbeam 4 extends along the transverse direction Y and is coupled to the bed 2 movably along the longitudinal direction X. The crossbeam 4 is moved by a first movement system which may, for example, comprise first linear guides, a first actuator such as a synchronous electric motor, and a first motion transmission system such as a rack and pinion or a lead nut and screw system. The crossbeam has a first face 41, parallel to the transverse direction Y, and a second face 42, parallel and opposite to the first face 41. The crossbeam also comprises a main beam 43. The main beam 43 is positioned above the work table 3 and, in the view perpendicular to the working plane XY, is superposed on the work table 3. Furthermore, the crossbeam 4 may comprise a first set of brushes 46. The first set of brushes 46 may extend between the main beam 43 and the work table 3. Additionally, the crossbeam 4 comprises a first secondary beam 44. The first secondary beam 44 is positioned at the first longitudinal side and, in the view perpendicular to the working plane XY, juts out from the work table 3. In particular, the crossbeam 4 comprises a second secondary beam 45. The second secondary beam 45 is positioned at the second longitudinal side and, in the view perpendicular to the working plane, juts out from the work table 3.

Additionally, the machine 1 comprises a machining head 5. The machining head 5 is coupled to the crossbeam 4. In particular, the machining head is coupled to the first face 41 of the crossbeam 4. The machining head 5 comprises a first machining unit 51. The first machining unit 51 may comprise an electrospindle, configured to support and rotationally carry a tool. The tool may be coupled and uncoupled to and from the electrospindle automatically, semi-automatically or manually. Furthermore, the machining head 5 may comprise a second machining unit 52 such as, for example, what is known as a "drilling head". The machining head 5 may comprise different machining units with fixed or interchangeable tools of varying complexity, and also what are known as "edge banding" units.

The machining head 5 is coupled to the crossbeam 4 movably along the transverse direction Y. The machining head 5 is moved along the transverse direction by a second movement system which may, for example, comprise second linear guides, a second actuator such as a synchronous electric motor, and a second motion transmission system such as a rack and pinion or a lead nut and screw system. Furthermore, the machining head 5, the first machining unit 51 and/or the second machining unit 52 may be coupled to the crossbeam 4 movably along a vertical direction Z orthogonal to the transverse direction Y and to the longitudinal direction X. The machining head 5, the first machining unit 51 and/or the second machining unit 52 may be moved along the vertical direction Z by a respective third movement system which may, for example, comprise third linear guides, a third actuator such as a synchronous electric motor, and a third motion transmission system such as a rack and pinion or a lead nut and screw system.

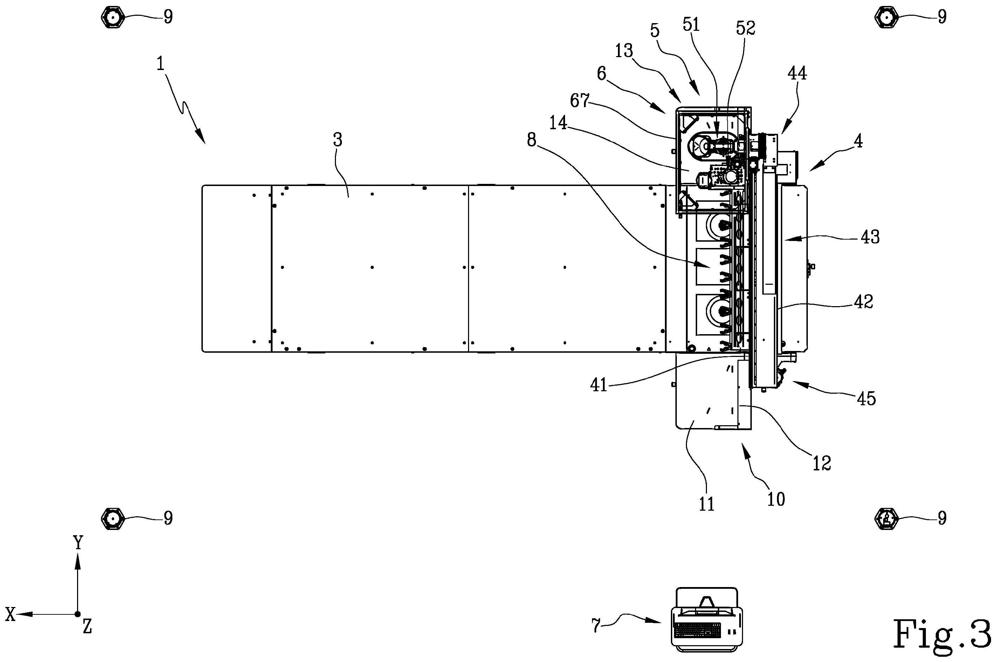

The machine 1 also comprises a safety enclosure 6. In a view perpendicular to the working plane XY, the safety enclosure laterally surrounds the machining head 5. In particular, the safety enclosure extends along the vertical direction Z, substantially from the working plane XY to the top of the machining unit 5. With reference in particular to Figures 1 and 3, the safety enclosure 6 may have a substantially rectangular or C-shaped cross section. If its cross section is C-shaped, the safety enclosure 6 does not completely surround the machining head but leaves a gap to allow the machining head 5 to be coupled to the crossbeam 4. In this case, a portion of the crossbeam 4 (for example, a portion of the main beam 43 and a portion of the first set of brushes 46) cooperates with the safety enclosure 6 to laterally and completely surround the machining head 5 so as to block any part that might accidentally come detached from the tool. That way, the machining head 5 is enclosed within a space which is delimited at the side by the safety enclosure 6 (and, if necessary, by a part of the crossbeam 4) and, at the base or bottom, by the work table 3. The safety enclosure 6 comprises a rigid portion 61. The rigid portion 61 may, for example, be made of metal. Furthermore, the rigid portion 61 may be provided with inspection windows which are made, for example, of transparent plastic material or glass. The safety enclosure may also comprise a second set of brushes 62. The second set of brushes 62 may extend between the rigid portion 61 and the working plane XY. The second set of brushes 62, like the rigid portion 61, might not completely surround the machining head 5. In effect, when the head is at the first working position, the first set of brushes 46 may cooperate with the second set of brushes to completely surround the machining head 5 so it is contained within a closed space. The safety enclosure 6 is solidly coupled to the machining head 5. By "solidly" is meant that the safety enclosure 6 is movable as one with the machining head 5 along the longitudinal direction X and the transverse direction Y.

The machine 1 also comprises an operator position 7. The operator position 7 comprises a control console from which an operator can control the machine 1. The console typically comprises a screen and an industrial computer.

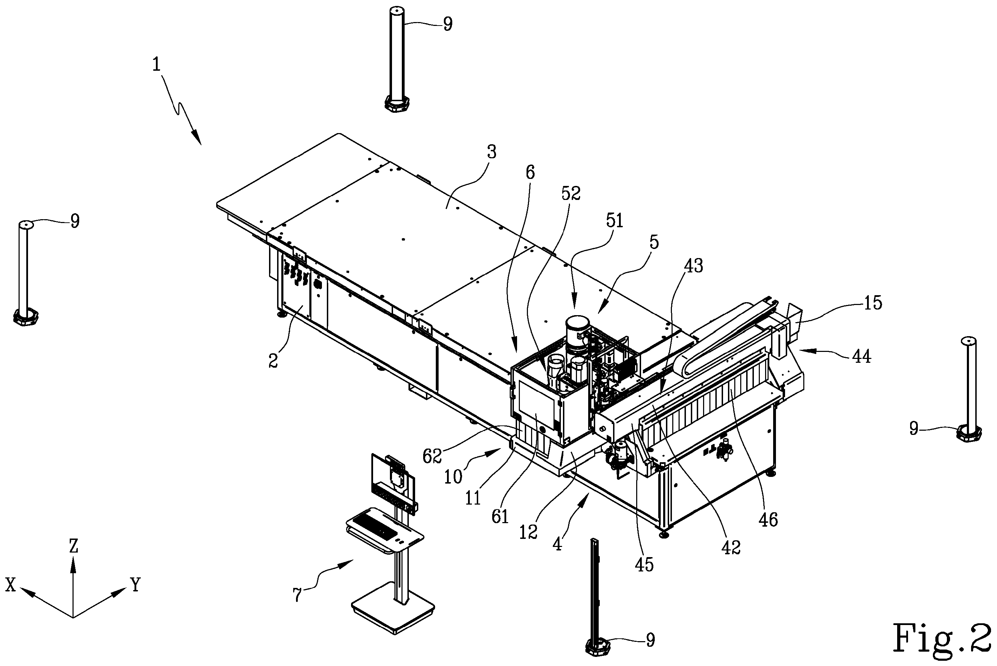

With reference in particular to Figure 1, the machine 1 may comprise a tool magazine 8. The tool magazine 8 is configured to contain a plurality of tools. The machine 1 is configured so that the machining head 5 can automatically pick up and release tools from the tool magazine 8. In particular, the tool magazine 8 is located at the second transverse side of the work table 3 i.e. the side of the machine which is parallel and opposite to the second face 42 of the crossbeam 4. More specifically, the tool magazine 8 may extend along the transverse direction Y. As shown, for example, in Figures 2, 3 and 4, the main beam 43 is configured to be able to be positioned over the tool magazine 8, in the view perpendicular to the working plane XY, so that the machining head 5 can reach the tool magazine 8. The first set of brushes 46 is designed to allow the tool magazine 8 to pass between the main beam 43 and the work table 3 while acting as a barrier for any part that might accidentally come detached from the tool when working.

The machine 1 comprises a safety system 9 for detecting the ingress of an operator inside a safety area adjacent to the machine 1. With reference in particular to Figure 1, the safety system 9 comprises a photocell system. In particular, the safety system 9 comprises a light source, configured to emit light, a receiver, configured to detect the light emitted by the light source, and a set of mirrors configured to reflect the light emitted by the light source towards the receiver. The set of mirrors is positioned so as to create a path for the light emitted by the light source to completely surround the machine 1. Thus, when approaching the machine 1 from any direction, an operator necessarily passes through the path created by the set of mirrors, thereby interrupting the transmission of light from the light source to the receiver. The receiver, when it no longer receives the light emitted by the light source, detects the ingress of the operator inside the safety area adjacent to the machine. In the example shown in Figure 1, the safety area surrounds the machine 1 completely. Such a safety system 9 detects the ingress of an operator inside the safety area but does not prevent the operator from approaching the machine 1 like a physical barrier would.

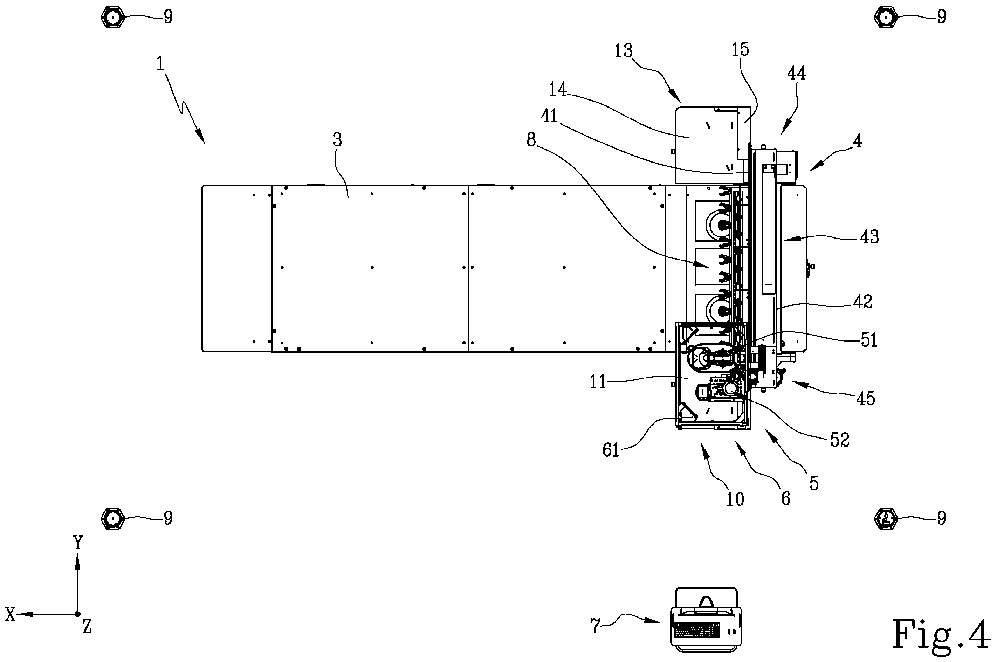

The machine 1 also comprises a first ledge 10. The first ledge 10 is adjacent to the first longitudinal side of the work table 3. In particular, the first ledge 10 has a first flat portion 11 which is parallel to the working plane XY. The first flat portion 11 of the first ledge 10 is coplanar with the work table 3 so as to create an uninterrupted surface with the work table 3. With reference in particular to Figures 3 and 4, which show a view perpendicular to the working plane XY, the first flat portion 11 of the first ledge 10 is equal in size to the maximum size of the portion of the safety enclosure 6 that can jut out from the work table 3, in particular from the first longitudinal side of the work table 3. The first ledge 10 is coupled to the crossbeam 4, in particular to the first secondary beam 44, in such a way as to be movable along the longitudinal direction X. The first ledge 10 comprises a first protective wall 12. The first protective wall 12 extends along the vertical direction Z between the first flat portion 11 and the rigid portion 61. Furthermore, the first protective wall 12 extends at least along the perimeter of the first flat portion 11, in particular along the side of it which is parallel to the transverse direction Y and opposite the crossbeam 4. The first protective wall 12 contributes to creating a barrier around the machining head 5, like the first set of brushes 46, when the safety enclosure 6 juts out from the work table 3, in the view perpendicular to the working plane XY.

The machine 1 comprises a second ledge 13. The second ledge 13 is adjacent to the second longitudinal side of the work table 3. In particular, the second ledge 13 has a second flat portion 14 which is parallel to the working plane XY. The second flat portion 14 of the second ledge 13 is coplanar with the work table 3 so as to create an uninterrupted surface with the work table 3. With reference in particular to Figures 3 and 4, which show a view perpendicular to the working plane XY, the second flat portion 14 of the second ledge 13 is equal in size to the maximum size of the portion of the safety enclosure 6 that can jut out from the work table 3, in particular from the second longitudinal side of the work table 3. The second ledge 13 is coupled to the crossbeam 4, in particular to the second secondary beam 45, in such a way as to be movable along the longitudinal direction X. The second ledge 13 comprises a second protective wall 15. The second protective wall 15 extends along the vertical direction Z between the second flat portion 14 and the rigid portion 61. Furthermore, the second protective wall 15 extends at least along the perimeter of the second flat portion 14, in particular along the side of it which is parallel to the transverse direction Y and opposite the crossbeam 4. The second protective wall 15 contributes to creating a barrier around the machining head 5, like the first set of brushes 46, when the safety enclosure 6 juts out from the work table 3, in the view perpendicular to the working plane XY. Described hereinafter is an example of how the machine 1 according to the invention works.

During machining of the part, i.e. when the tool is made to rotate at high speed, the machining head 5 can adopt one or more first working positions. At the first working positions, in the view perpendicular to the working plane XY, the safety enclosure 6 is contained completely within the work table 3. At the first positions, the machining head 5 is enclosed within a space which is delimited, at the side, by the safety enclosure 6 (and partly also by a portion of the crossbeam 4, as better described above) and, at the bottom, by the work table 3. Also during machining of the part, the machining head 5 may adopt one or more second working positions as well. At the second working positions, in the view perpendicular to the working plane XY, at least a portion of the safety enclosure 6 juts out from the work table 3.

In the example shown in Figures 1 and 3, the machining head 5 is at the end of its stroke, along the transversal direction Y, on the crossbeam 4, in particular, in proximity to the first longitudinal side of the work table 3. In this configuration, the machining head 5 is at a second working position and the safety enclosure juts out to its maximum extent from the work table 3, in particular from the first longitudinal side of it. At this second working position, the portion of the safety enclosure 6 jutting out from the work table 3 is positioned on the first ledge 10, in particular on the first flat portion 11 of the first ledge 10. The first flat portion 11 of the first ledge 10 is greater than or equal in size to the maximum size of the portion of the safety enclosure 6 that can jut out from the work table 3, beyond the first longitudinal side of the work table 3, so as to be able to completely enclose the jutting portion of the safety enclosure 6, in the view perpendicular to the working plane XY. That way, even at the second working positions, the machining head 5 is enclosed within a closed space, which, in particular, is delimited, at the side, by the safety enclosure 6 (and partly also by a portion of the crossbeam 4 and by the first protective wall 12, as better described above) and, at the bottom, by the work table 3 and by the first flat portion 11 of the first ledge 10. Moving the crossbeam 4 along the longitudinal direction X causes the first ledge 10 to also move. Therefore, the first ledge 10 is always at the correct position to contain the portion of the safety enclosure 6 which juts out from the first longitudinal side of the work table 3.

Figures 2 and 4 show a configuration which is the opposite of the configuration shown in Figures 1 and 3. In particular, in Figures 2 and 4, the machining head 5 is at the end of its stroke, along the transversal direction Y, on the crossbeam 4, in particular, in proximity to the second longitudinal side of the work table 3. In this configuration, the machining head 5 is at a second working position and the safety enclosure juts out to its maximum extent from the work table 3, in particular from the second longitudinal side of it. At this second working position, the portion of the safety enclosure 6 jutting out from the work table 3 is positioned on the second ledge 13, in particular on the second flat portion 14 of the second ledge 13. The second flat portion 14 of the second ledge 13 is greater than or equal in size to the maximum size of the portion of the safety enclosure 6 that can jut out from the work table 3, beyond the second longitudinal side of the work table 3, so as to be able to completely enclose the jutting portion of the safety enclosure 6, in the view perpendicular to the working plane XY. That way, even at the second working positions, the machining head 5 is enclosed within a closed space, which, in particular, is delimited, at the side, by the safety enclosure 6 (and partly also by a portion of the crossbeam 4 and by the second protective wall 15, as better described above) and, at the bottom, by the work table 3 and by the second flat portion 14 of the second ledge 13. Moving the crossbeam 4 along the longitudinal direction X causes the second ledge 13 to also move. Therefore, the second ledge 13 is always at the correct position to contain the portion of the safety enclosure 6 which juts out from the second longitudinal side of the work table 3.

## Claims

1. A machine (1) for machining wood, comprising:
- a work table (3), for supporting and holding down a part to be machined, the work table (3) defining a working plane (XY);
- a machining head (5), movable on the work table (3) along a longitudinal direction (X) and a transverse direction (Y), parallel to the work table and perpendicular to each other; and
- a safety enclosure (6), solidly coupled to the machining head (5) and, in a view perpendicular to the working plane, configured to laterally enclose at least part of the machining head (5),
wherein, in the view perpendicular to the working plane, the machining head (5) is movable between a first working position, where the safety enclosure (6) is contained completely within the work table (3), and a second working position, where a portion of the safety enclosure (6) juts out from the work table (3),
**characterised in that** the machine further comprises a ledge (10, 13) adjacent to the work table (3) and, in the view perpendicular to the working plane, configured to completely contain the portion of the safety enclosure (6) which juts out from the work table (3) at the second working position.

2. The machine (1) according to claim 1, comprising a plurality of ledges (10, 13), each ledge (10, 13) being adjacent to a longitudinal side or to a transverse side of the work table (3).

3. The machine (1) according to either of the preceding claims, wherein, in the view perpendicular to the working plane, the ledge (10, 13) is greater than or equal in size to the maximum size of the portion of the safety enclosure (6) which can jut out from the work table (3).

4. The machine (1) according to any one of the preceding claims, wherein the ledge (10, 13) extends for the full length of one side of the work table (3).

5. The machine (1) according to any one of claims 1 to 3, wherein the ledge (10, 13) is adjacent to a longitudinal side of the work table (3) and is movable along the longitudinal direction (X), or is adjacent to a transverse side of the work table (3) and is movable along the transverse direction (Y).

6. The machine (1) according to claim 5, comprising a crossbeam (4) extending along the transverse direction (Y) and movable along the work table (3) along the longitudinal direction (X), wherein the machining head (5) is coupled to the crossbeam (4) movably along the transverse direction (Y), and wherein the ledge (10, 13) is adjacent to a longitudinal side of the work table (3) and is coupled to the crossbeam (4) in such a way as to be movable along the longitudinal direction (X).

7. The machine (1) according to claim 6, comprising a first ledge (10), adjacent to a first longitudinal side of the work table (3) and coupled to the crossbeam (4), and a second ledge (13), adjacent to a second longitudinal side of the work table (3), parallel and opposite to the first longitudinal side, and coupled to the crossbeam (4).

8. The machine (1) according to claim 7, wherein the crossbeam (4) comprises a main beam (43) which, in the view perpendicular to the working plane (XY), is positioned over the work table (3), and a first set of brushes (46) which extends between the main beam (43) and the work table (3).

9. The machine (1) according to claim 8, wherein the crossbeam (4) comprises:
- a first secondary beam (44) positioned at the first longitudinal side and, in the view perpendicular to the working plane, jutting out from the work table (3);
- a first protective guard extending between the first secondary beam (44) and the first ledge (10);
- a second secondary beam (45) positioned at the second longitudinal side and, in the view perpendicular to the working plane, jutting out from the work table (3);
- a second protective guard extending between the second secondary beam (45) and the second ledge (13);

10. The machine (1) according to claim 8 or 9, wherein the crossbeam (4) has a first face (41), parallel to the transverse direction (Y), and a second face (42), parallel and opposite to the first face (41), wherein the machining head (5) is coupled to the first face (41) of the crossbeam (4), wherein the machine (1) comprises a tool magazine (8) located at one side of the work table (3), parallel and opposite to the second face (42) of the crossbeam (4), and wherein the main beam (43) is, in the view perpendicular to the working plane (XY), configured to be able to be positioned over the tool magazine (8).

11. The machine (1) according to any one of claims 6 to 10, wherein, in the view perpendicular to the working plane (XY), the safety enclosure (6) and the crossbeam (4) cooperate to surround the machining head (5) laterally and completely, a part of the crossbeam (4) acting as a portion of the safety enclosure (6), as a function of the position of the machining head (5) on the crossbeam (4).

12. The machine (1) according to any one of the preceding claims, wherein the safety enclosure (6) comprises a rigid portion (61) and a second set of brushes (62) extending between the rigid portion (61) and the working plane (XY).

13. The machine (1) according to any one of the preceding claims, wherein the ledge (10, 13) comprises a flat portion (11, 14) and a protective wall (12, 15) extending between the flat portion (11, 14) and the rigid portion (61) of the safety enclosure, when the safety enclosure (6) is positioned over the ledge (10, 13).

14. The machine (1) according to any one of the preceding claims, comprising a safety system (9) for detecting the ingress of an operator inside a safety area adjacent to the machine (1).

## Patentansprüche

1. Maschine (1) zur Bearbeitung vom Holz, umfassend:
- einen Arbeitstisch (3) zum Abstützen und Niederhalten eines zu bearbeitenden Teils, wobei der Arbeitstisch (3) eine Arbeitsebene (XY) definiert;
- einen Bearbeitungskopf (5), der auf dem Arbeitstisch (3) entlang einer Längsrichtung (X) und einer Querrichtung (Y), parallel zum Arbeitstisch und senkrecht zueinander bewegbar ist; und
- eine Sicherheitseinhausung (6), das fest mit dem Bearbeitungskopf (5) gekoppelt ist und in einer Ansicht senkrecht zur Arbeitsebene ausgelegt ist, um zumindest einen Teil des Bearbeitungskopfs (5) seitlich zu umschließen,
wobei der Bearbeitungskopf (5) in der Ansicht senkrecht zur Arbeitsebene zwischen einer ersten Arbeitsposition, in der die Sicherheitseinhausung (6) vollständig innerhalb des Arbeitstisches (3) enthalten ist, und einer zweiten Arbeitsposition, in der ein Abschnitt der Sicherheitseinhausung (6) aus dem Arbeitstisch (3) herausragt, bewegbar ist,
**dadurch gekennzeichnet, dass** die Maschine ferner eine Leiste (10, 13) angrenzend an den Arbeits-tisch (3) und in der Ansicht senkrecht zur Arbeitsebene ausgelegt, um den Abschnitt der Sicherheitseinhausung (6), der an der zweiten Arbeitsposition aus dem Arbeitstisch (3) herausragt, vollständig zu enthalten.

2. Maschine (1) nach Anspruch 1, umfassend eine Vielzahl von Leisten (10, 13), wobei eine jede Leiste (10, 13) an eine Längsseite oder an eine Querseite des Arbeitstisches (3) angrenzt.

3. Maschine (1) nach einem der vorhergehenden Ansprüche, wobei die Leiste (10, 13) in der Ansicht senkrecht zur Arbeitsebene größer oder gleich der maximalen Größe des Abschnitts der Sicherheitseinhausung (6) ist, die aus dem Arbeitstisch (3) herausragen kann.

4. Maschine (1) nach einem der vorhergehenden Ansprüche, wobei sich die Leiste (10, 13) über die gesamte Länge einer Seite des Arbeitstisches (3) erstreckt.

5. Maschine (1) nach einem der Ansprüche 1 bis 3, wobei die Leiste (10, 13) an eine Längsseite des Arbeitstisches (3) angrenzt und entlang der Längsrichtung (X) bewegbar ist oder an eine Querseite des Arbeitstisches (3) angrenzt und entlang der Querrichtung (Y) bewegbar ist.

6. Maschine (1) nach Anspruch 5, umfassend einen Querträger (4), der sich entlang der Querrichtung (Y) erstreckt und entlang der Längsrichtung (X) entlang des Arbeitstisches (3) bewegbar ist, wobei der Bearbeitungskopf (5) entlang der Querrichtung (Y) bewegbar mit dem Querträger (4) gekoppelt ist, und wobei die Leiste (10, 13) an eine Längsseite des Arbeitstisches (3) angrenzt und entlang der Längsrichtung (X) bewegbar mit dem Querträger (4) gekoppelt ist.

7. Maschine (1) nach Anspruch 6, umfassend eine erste Leiste (10), die an eine erste Längsseite des Arbeitstisches (3) angrenzt und an den Querträger (4) gekoppelt ist, und eine zweite Leiste (13), die an eine zweite Längsseite des Arbeitstisches (3) angrenzt, parallel und gegenüber der ersten Längsseite ist und an den Querträger (4) gekoppelt ist.

8. Maschine (1) nach Anspruch 7, wobei der Querträger (4) einen Hauptträger (43), der in der Ansicht senkrecht zur Arbeitsebene (XY) über dem Arbeitstisch (3) positioniert ist, und einen ersten Satz von Bürsten (46) umfasst, der sich zwischen dem Hauptträger (43) und dem Arbeitstisch (3) erstreckt.

9. Maschine (1) nach Anspruch 8, wobei der Querträger (4) Folgendes umfasst:
- einen ersten Sekundärträger (44), der an der ersten Längsseite positioniert ist und in der Ansicht senkrecht zur Arbeitsebene aus dem Arbeitstisch (3) herausragt;
- eine erste Schutzhaube, die sich zwischen dem ersten Sekundärträger (44) und der ersten Leiste (10) erstreckt;
- einen zweiten Sekundärträger (45), der an der zweiten Längsseite positioniert ist und in der Ansicht senkrecht zur Arbeitsebene aus dem Arbeitstisch (3) herausragt;
- eine zweite Schutzhaube, die sich zwischen dem zweiten Sekundärträger (45) und der zweiten Leiste (13) erstreckt.

10. Maschine (1) nach Anspruch 8 oder 9, wobei der Querträger (4) eine erste Fläche (41) parallel zur Querrichtung (Y) und eine zweite Fläche (42) parallel und entgegengesetzt zur ersten Fläche (41) aufweist, wobei der Bearbeitungskopf (5) mit der ersten Fläche (41) des Querträgers (4) gekoppelt ist, wobei die Maschine (1) ein Werkzeugmagazin (8) umfasst, das an einer Seite des Arbeitstisches (3) parallel und entgegengesetzt zur zweiten Fläche (42) des Querträgers (4) angeordnet ist, und wobei der Hauptträger (43) in der Ansicht senkrecht zur Arbeitsebene (XY) so ausgelegt ist, dass er über dem Werkzeugmagazin (8) positioniert werden kann.

11. Maschine (1) nach einem der Ansprüche 6 bis 10, wobei in der Ansicht senkrecht zur Arbeitsebene (XY) die Sicherheitseinhausung (6) und der Querträger (4) zusammenwirken, um den Bearbeitungskopf (5) seitlich und vollständig zu umgeben, wobei ein Teil des Querträgers (4) als ein Abschnitt der Sicherheitseinhausung (6) in Abhängigkeit von der Position des Bearbeitungskopfs (5) auf dem Querträger (4) wirkt.

12. Maschine (1) nach einem der vorhergehenden Ansprüche, wobei die Sicherheitseinhausung (6) einen starren Abschnitt (61) und einen zweiten Satz von Bürsten (62) umfasst, der sich zwischen dem starren Abschnitt (61) und der Arbeitsebene (XY) erstreckt.

13. Maschine (1) nach einem der vorhergehenden Ansprüche, wobei die Leiste (10, 13) einen flachen Abschnitt (11, 14) und eine Schutzwand (12, 15) umfasst, die sich zwischen dem flachen Abschnitt (11, 14) und dem starren Abschnitt (61) der Sicherheitseinhausung erstreckt, wenn die Sicherheitseinhausung (6) über der Leiste (10, 13) positioniert ist.

14. Maschine (1) nach einem der vorhergehenden Ansprüche, umfassend ein Sicherheitssystem (9) zum Erfassen des Eindringens eines Bedieners in einen an die Maschine (1) angrenzenden Sicherheitsbereich.

## Revendications

1. Machine (1) pour usiner du bois, comprenant :
- une table de travail (3), pour soutenir et maintenir en place une pièce à usiner, la table de travail (3) définissant un plan de travail (XY) ;
- une tête d'usinage (5), mobile sur la table de travail (3) le long d'une direction longitudinale (X) et d'une direction transversale (Y), parallèles à la table de travail et perpendiculaires l'une à l'autre ; et
- une enceinte de sécurité (6), solidement couplée à la tête d'usinage (5) et, dans une vue perpendiculaire au plan de travail, configurée pour entourer latéralement au moins une partie de la tête d'usinage (5),
dans laquelle, dans la vue perpendiculaire au plan de travail, la tête d'usinage (5) est mobile entre une première position de travail, où l'enceinte de sécurité (6) est complètement contenue dans la table de travail (3), et une seconde position de travail, où une portion de l'enceinte de sécurité (6) fait saillie de la table de travail (3),
**caractérisée en ce que** la machine comprend en outre un rebord (10, 13) adjacent à la table de travail (3) et, dans la vue perpendiculaire au plan de travail, configurée pour contenir complètement la portion de l'enceinte de sécurité (6) qui fait saillie de la table de travail (3) dans la seconde position de travail.

2. Machine (1) selon la revendication 1, comprenant une pluralité de rebords (10, 13), chaque rebord (10, 13) étant adjacent à un côté longitudinal ou à un côté transversal de la table de travail (3).

3. Machine (1) selon l'une quelconque des revendications précédentes, dans laquelle, dans la vue perpendiculaire au plan de travail, le rebord (10, 13) a une taille supérieure ou égale à la taille maximale de la portion de l'enceinte de sécurité (6) qui peut faire saillie de la table de travail (3).

4. Machine (1) selon l'une quelconque des revendications précédentes, dans laquelle le rebord (10, 13) s'étend sur toute la longueur d'un côté de la table de travail (3).

5. Machine (1) selon l'une quelconque des revendications 1 à 3, dans laquelle le rebord (10, 13) est adjacent à un côté longitudinal de la table de travail (3) et est mobile le long de la direction longitudinale (X), ou est adjacent à un côté transversal de la table de travail (3) et est mobile le long de la direction transversale (Y).

6. Machine (1) selon la revendication 5, comprenant une traverse (4) s'étendant le long de la direction transversale (Y) et mobile le long de la table de travail (3) le long de la direction longitudinale (X), dans laquelle la tête d'usinage (5) est couplée à la traverse (4) de manière mobile le long de la direction transversale (Y), et dans laquelle le rebord (10, 13) est adjacent à un côté longitudinal de la table de travail (3) et est couplé à la traverse (4) de manière à être mobile le long de la direction longitudinale (X).

7. Machine (1) selon la revendication 6, comprenant un premier rebord (10), adjacent à un premier côté longitudinal de la table de travail (3) et couplé à la traverse (4), et un second rebord (13), adjacent à un second côté longitudinal de la table de travail (3), parallèle et opposé au premier côté longitudinal, et couplé à la traverse (4).

8. Machine (1) selon la revendication 7, dans laquelle la traverse (4) comprend une poutre principale (43) qui, dans la vue perpendiculaire au plan de travail (XY), est positionnée au-dessus de la table de travail (3), et un premier jeu de brosses (46) qui s'étend entre la poutre principale (43) et la table de travail (3).

9. Machine (1) selon la revendication 8, dans laquelle la traverse (4) comprend :
- une première poutre secondaire (44) positionnée sur le premier côté longitudinal et, dans la vue perpendiculaire au plan de travail, faisant saillie de la table de travail (3) ;
- une première protection s'étendant entre la première poutre secondaire (44) et le premier rebord (10) ;
- une seconde poutre secondaire (45) positionnée sur le second côté longitudinal et, dans la vue perpendiculaire au plan de travail, faisant saillie de la table de travail (3) ;
- une seconde protection s'étendant entre la seconde poutre secondaire (45) et le second rebord (13).

10. Machine (1) selon la revendication 8 ou 9, dans laquelle la traverse (4) comporte une première face (41), parallèle à la direction transversale (Y), et une seconde face (42), parallèle et opposée à la première face (41), dans laquelle la tête d'usinage (5) est couplée à la première face (41) de la traverse (4), dans laquelle la machine (1) comprend un magasin d'outils (8) situé d'un côté de la table de travail (3), parallèle et opposée à la seconde face (42) de la traverse (4), et dans laquelle la poutre principale (43) est, dans la vue perpendiculaire au plan de travail (XY), configurée pour pouvoir être positionnée au-dessus du magasin d'outils (8).

11. Machine (1) selon l'une quelconque des revendications 6 à 10, dans laquelle, dans la vue perpendiculaire au plan de travail (XY), l'enceinte de sécurité (6) et la traverse (4) coopèrent pour entourer la tête d'usinage (5) latéralement et complètement, une partie de la traverse (4) agissant comme une portion de l'enceinte de sécurité (6), en fonction de la position de la tête d'usinage (5) sur la traverse (4).

12. Machine (1) selon l'une quelconque des revendications précédentes, dans laquelle l'enceinte de sécurité (6) comprend une portion rigide (61) et un second jeu de brosses (62) s'étendant entre la portion rigide (61) et le plan de travail (XY).

13. Machine (1) selon l'une quelconque des revendications précédentes, dans laquelle le rebord (10, 13) comprend une portion plate (11, 14) et une paroi de protection (12, 15) s'étendant entre la portion plate (11, 14) et la portion rigide (61) de l'enceinte de sécurité, lorsque l'enceinte de sécurité (6) est positionnée au-dessus du rebord (10, 13).

14. Machine (1) selon l'une quelconque des revendications précédentes, comprenant un système de sécurité (9) pour détecter l'entrée d'un opérateur à l'intérieur d'une zone de sécurité adjacente à la machine (1).
